# EUROPÄISCHE PATENTANMELDUNG

(11) **EP 3 495 784 A1**
(43) Veröffentlichungstag der Anmeldung: **12.06.2019**
(21) Anmeldenummer: 17205791.1
(22) Anmeldetag: 07.12.2017
(51) Int. Cl.: G01F 1/84

(54) **CORIOLIS-MASSENDURCHFLUSSMESSGERÄT**

(71) Anmelder: Heinrichs Messtechnik GmbH, 50739 Köln (DE)
(72) Erfinder: CHATZIKONSTANTINOU, Thomas, 52062 Aachen (DE)
(74) Vertreter: Keil & Schaafhausen Patent- und Rechtsanwälte PartGmbB

(57) **Zusammenfassung**

Es wird ein Coriolis-Massendurchflussmessgerät beschrieben mit einem Gehäusekörper (10), der einen Strömungseinlass (31) und einen Strömungsauslass (32) für ein fluides Medium aufweist, zwei beabstandet voneinander angeordneten Messrohren (23, 24), die an dem Gehäusekörper (10) festgelegt sind und den Strömungseinlass (31) und den Strömungsauslass (32) miteinander verbinden, mindestens einem elektrisch ansteuerbaren Schwingungserreger (42, 45) für jedes Messrohr (23, 24), wobei der Schwingungserreger (42, 45) dazu eingerichtet ist, das Messrohr (23, 24) in Schwingung zu versetzen, und mindestens zwei elektrisch ansteuerbaren Schwingungsaufnehmern (41, 43, 44, 46), wobei die Schwingungsaufnehmer (41, 43, 44, 46) dazu eingerichtet sind, die Schwingung mindestens eines der beiden Messrohre (23, 24) aufzunehmen. Es ist vorgesehen, dass die Schwingungserreger (42, 45) und die Schwingungsaufnehmer (41, 43, 44, 46) raumfest zwischen den beiden Messrohren (23, 24) an dem Gehäusekörper (10) festgelegt sind.

## Beschreibung

Die Erfindung betrifft ein Coriolis-Massendurchflussmessgerät mit einem Gehäusekörper, der einen Strömungseinlass und einen Strömungsauslass für ein fluides Medium aufweist, sowie mit zwei beabstandet voneinander abgeordneten, vorzugsweise parallel verlaufenden Messrohren, die an dem Gehäusekörper festgelegt sind und den Strömungseinlass und den Strömungsauslass miteinander verbinden, so dass ein zu messendes fluides Medium von den Strömungseinlass durch das Messrohr zu dem Strömungsauslass fließt, d.h. mit anderen Worten, dass die Messrohre den Strömungseinlass und den Strömungsauslass strömungstechnisch miteinander verbinden. Für jedes Messrohr ist mindestens ein elektrisch ansteuerbarer Schwingungserreger vorgesehen, wobei der Schwingungserreger dazu eingerichtet ist, das Messrohr in Schwingung zu versetzen. Ferner weist das Coriolis-Massendurchflussmessgerät mindestens zwei elektrisch ansteuerbaren Schwingungsaufnehmer auf, wobei die Schwingungsaufnehmer dazu eingerichtet sind, die Schwingung mindestens eines der beiden Messrohre aufzunehmen. Bei der Messung des Durchflusses des fluiden Mediums schwingen die beiden Messrohre gegeneinander.

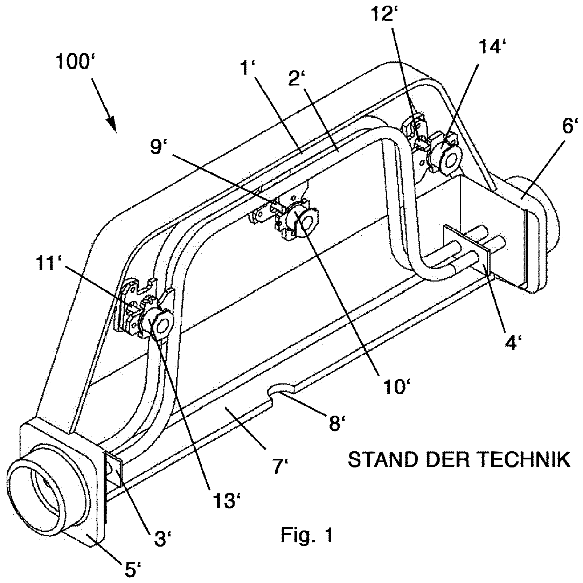

Das Prinzip von Coriolis-Massendurchflussmessgeräten ist aus dem Stand der Technik bekannt und wird bspw. in der US 6,776,052 B2 oder der EP 1 429 119 A1 beschrieben. Das Prinzip der bekannten Coriolis-Massendurchflussmessgeräte wird nachfolgend anhand von Fig. 1 beschrieben, die perspektivisch ein Coriolis-Massendurchflussmessgerät 100' nach dem Stand der Technik zeigt. Um einen Einblick ins Innere zu ermöglichen, werden Teile des Gehäuses und Prozessanschlüsse nicht dargestellt. Anschlusskabel und ggf. Auswerteelektronik sind in Fig. 1 ebenfalls nicht dargestellt. Die Anschlusskabel verlaufen üblicherweise frei zwischen den elektronischen Bauteilen und einem Gerätestecker zum Anschließen einer geräteexternen Mess- und Auswerteelektronik oder zu einer außerhalb des Messraums angeordneten Mess- und Auswerteelektronik.

Coriolis-Massendurchflussmessgerät 100' nach dem Stand der Technik weisen zwei Messrohren 1', 2' und einen Schwingungserreger auf, der aus einem Permanentmagnet-Spulen-Paar 9', 10' aufgebaut ist, um Schwingungen auf die Messrohre1', 2' zu übertragen. Ferner sind zwei Schwingungsaufnehmer vorgesehen, die jeweils auch aus einem Permanentmagnet-Spulen-Paar 11', 13' bzw. 12', 14' zur Aufnahme der Schwingungen der Messrohre 1', 2' aufgebaut sind. Die Permanentmagnet-Spulen-Paar 9' und 10', 11' und 13', 12' und 14' sind jeweils derart an dem Messrohren 1', 2' angeordnet, dass die Permanentmagneten 9', 11', 12' an dem Messrohr 1' und die Spulen 10', 13' und 14' an dem Messrohr 2' durch geeignete Halter festgelegt sind. Wenn ein Strompuls durch die Spule 10' des Schwingungserregers an dem Messrohr 2' fließt, wird der an dem anderen Messrohr 1' festgelegte Permanentmagnet 9' (je noch Polung) in die Spule 10' hineingezogen oder von der Spule 10' abgestoßen. Hierdurch werden die beiden Messrohre 1' und 2' gegeneinander in Schwingung versetzt.

Zur Fixierung der Messrohre 1', 2' sind mindestens zwei Koppelelemente 3', 4', manchmal auch Querstreben oder Knotenbleche genannt, zum Koppeln der Messrohre vorgesehen, um die Schwingungsbedingungen für beide Messrohre 1' und 2' vergleichbar zu halten. Die Einlass- und Auslassseiten der beiden Messrohre 1', 2' sind paarweise mit je einem Strömungsteiler 5', 6' verbunden, von denen der Strömungsteiler 5' an der Einlassseite das strömende Fluid zu den Einlässen der beiden Messrohre 1', 2' zuführt und der Strömungsteiler 6' an der Auslassseite das strömende Fluid von den Auslässen der beiden Messrohre abführt. Die Strömungsteiler 5', 6' werden einlass- und auslassseitig von einem (nur teilweise dargestellten, innen hohlen) Gehäuse 7' aufgenommen, sodass die Messrohre 1', 2', der Schwingungserreger 9', 10', die Schwingungsaufnehmer 11', 13' sowie 12', 14' und die Koppelelemente 3', 4' im inneren des Gehäuses 7 geschützt sind. Das Gehäuse 7 ist dabei auch so aufgebaut, dass die Durchführung 8' von Kabeln vom Inneren des Gerätes nach außen, d.h. zur Mess- und Auswerteelektronik, möglich ist.

Um in eine Prozessleitung eingebaut werden zu können, umfassen Coriolis-Massendurchflussmessgeräte auch Prozessanschlüsse (in Fig. 1 nicht dargestellt), die einlass- und auslassseitig je nach Gehäusevariante entweder mit dem Gehäuse 7' oder direkt mit den Strömungsteilern 5', 6' verbunden sind.

Bei Coriolis-Massendurchflussmessgeräten nach dem Stand der Technik sind Schwingungserreger meist derart aufgebaut, dass sie beispielweise einen Permanentmagneten 9' auf einem der Messrohre 2' sowie eine Spule 10' auf dem gegenüber liegenden Messrohr 1' aufweisen, um auf elektrischem Wege durch Erzeugen einer Kraftwirkung Schwingungen auf beide Messrohre 1', 2' zu übertragen. Jeder der zwei Schwingungsaufnehmer weist auch meist je einen Permanentmagneten 11', 12' auf einem der Messrohre 1' sowie je eine Spule 13', 14' auf dem gegenüber liegenden Messrohr 2' auf, um die Schwingungen der Messrohre 1', 2' durch Induktionswirkung zu erfassen. Die Schwingungsaufnehmer sind üblicherweise einlass- und auslassseitig montiert.

Die US 5,349,872 beschreibt eine Anordnung von Anregungs- und Messspulen auf Platinen, die jeweils über und unter den Messrohren angeordnet und über Winkel an einer Gehäusehülle festgelegt sind.

Ohne Durchfluss sind die Signale der zwei Schwingungsaufnehmer unter sich phasengleich. Bei durchströmendem Fluid (fluides Medium) ergibt sich durch die einlass- und auslassseitig unterschiedlichen Coriolis-Kräfte eine Phasenverschiebung der Signale der zwei Schwingungsaufnehmer, die proportional zum momentanen Massendurchfluss des fluiden Medium ist. Der Massendurchfluss des fluiden Mediums ist so durch die Phasenverschiebung der Signale bestimmbar.

Coriolis-Massendurchflussmessgeräte 100' nach dem Stand der Technik gibt es für die unterschiedlichsten Messbereiche. Die Bandbreite reicht von sehr großen Geräten mit einem Massendurchfluss von Tausenden Tonnen pro Stunde bis hinunter zu sehr kleinen Geräten mit einem Massendurchfluss von einem Kilogramm pro Stunde und weniger. Je kleiner aber ein Coriolis-Massendurchflussmessgerät 100' nach dem Stand der Technik wird, desto mehr konstruktive und letztendlich messtechnische Probleme tauchen auf, denn während die meisten Bauteile des Gerätes beim Verkleinern des Messgerätes 100' (entsprechend dem Messbereich) auch gut verkleinert werden können, so z.B. die Messrohre 1', 2', die Magnete 9', 11', 12', die Koppelelemente 3', 4' usw. und sogar das Gehäuse 7', so ist eine Skalierung hin zu kleinen Größen für die Spulen 10', 13', 14' der Schwingungserreger und Schwingungsaufnehmer und entsprechend für deren Befestigungselemente an den Messrohren 1', 2', die sog. Spulenhalter, nicht mehr so einfach möglich. Beides bringt bei kleinen Coriolis-Massendurchflussmessgeräten nach dem Stand der Technik diverse ungünstige Messeigenschaften dieser Geräte mit sich und führt zu konstruktiven Schwierigkeiten.

Es ist somit Aufgabe der vorliegenden Erfindung ein Coriolis-Massendurchflussmessgerät bereitzustellen, das konstruktiv einfacher und besser hin zu kleinen Größen (für einen entsprechend kleinen Messbereich) skalierbar ist.

Diese Aufgabe wird durch ein Coriolis-Massendurchflussmessgerät mit den Merkmalen des Anspruchs 1 gelöst. Dazu ist bei einem Coriolis-Massendurchflussmessgerät der eingangs genannten Art insbesondere vorgesehen, dass die Schwingungserreger und die Schwingungsaufnehmer raumfest an dem Gehäusekörper, bspw. an einer Ankonstruktion des Gehäusekörpers, zwischen den beiden Messrohren festgelegt sind. Unter Schwingungserreger und Schwingsaufnehmer werden im Sinne des nachfolgend beschriebenen, erfindungsgemäßen Coriolis-Massendurchflussmessgeräts die elektrisch ansteuerbaren Komponenten der Schwingungserreger und Schwingsaufnehmer verstanden, bspw. also elektromagnetisch betriebene Spulen.

Mit einem raumfesten Festlegen an dem Gehäusekörper ist gemeint, dass die Schwingungserreger und Schwingungsaufnehmer nicht an einem für die Durchführung der Messung relativ zu dem Gehäusekörper in Schwingung versetzten Bauteil, d.h. insbesondere nicht an einem Messrohr, festgelegt sind und relativ zu dem Gehäusekörper mit in Schwingung versetzt werden. Damit ist gemeint, dass Schwingungserreger und Schwingungsaufnehmer nicht an einem Bauteil festlegt sind, das entsprechend dem angewandten Messprinzip in Schwingung versetzt wird und dessen Schwingung zur Bestimmung des Massendurchflusses des Mediums erfasst und ausgewertet wird. Mögliche durch die Konstruktion bedingte Eigenschwingungen von Schwingungserreger, Schwingungsaufnehmer oder Ankonstruktion, die im Vergleich zu der messtechnisch erforderlichen Schwingung der Messrohre klein (bspw. kleiner als 10% oder 20%) sind, werden im Sinne dieser Beschreibung nicht als Schwingungen bezeichnet und werden als raumfest angesehen. Derartige mögliche Schwingungen sind unerwünscht, und es ist auch ein Aspekt der Erfindung, solche unerwünschten Schwingungen zu vermeiden. Dazu trägt auch das erfindungsgemäß vorgeschlagene Konzept bei, dass die elektrisch ansteuerbaren Teile der Schwingungserreger und Schwingsaufnehmer nicht an bestimmungsgemäß mitschwingenden Teilen, d.h. insbesondere nicht an den Messrohren, angeordnet sind.

Weil die elektrisch ansteuerbaren Schwingungserreger und Schwingungsaufnehmer nicht an den Messrohren befestigt sind und nicht mit diesen bei der Umsetzung des Messprinzips mitschwingen, beeinflussen die elektrisch ansteuerbaren Schwingungserreger und Schwingungsaufnehmer die Schwingung der Messrohre, und damit die Messung selbst, nicht.

Man denke z.B. an die äußeren Abmessungen der Spulen als Schwingungserreger und Schwingungsaufnehmer, die nach dem aus dem Stand der Technik bekannten Konstruktionsprinzip sehr klein sein müssten, wenn sie an entsprechend kleinen Messrohren festgelegt werden sollten. Der Durchmesser des Spulendrahtes würde der dann so dünn, dass man ihn kaum wickeln könnte und dass auch plötzliche Drahtbrüche an den Verbindungsdrähten, die die Spule mit den weiterführenden Leitungen im Inneren des Gerätes verbinden, auftreten könnten oder würden. Solche Drahtbrüche sind immer wieder, selbst bei sehr großen Geräten, an der Tagesordnung, denn bei Coriolis-Massendurchflussmessgeräten nach dem Stand der Technik schwingen die Verbindungsdrähte zusammen mit den Spulen, mehr oder weniger unkontrolliert, immer mit, was selbst bei Messgeräten in entsprechend großer Dimensionierung zu Problemen führt und für kleine Messgeräte in einem entsprechend kleinen Messbereich nicht mehr handhabbar ist.

Die Tatsache, dass Spulen, Spulendraht und Spulenhalter nicht beliebig verkleinert werden können, bringt aber bei kleinen Coriolis-Massendurchflussmessgeräten nach dem Stand der Technik noch weitere Probleme mit sich. Ab einer gewissen Größe werden Spulen und Spulenhalten sehr schwer im Vergleich zu den Messrohren selbst. Dadurch, d.h. durch die relativ hohe Masse der Spulen und der Spulenhalter, ändert sich die Eigenfrequenz der Messrohre nach unten gravierend. Die Geräte arbeiten dann in Bereichen von sehr kleinen Frequenzen, z.B. in der Nähe von 100 Herz oder noch tiefer, was die Geräte nicht nur ungenauer, sondern auch sehr empfindlich gegen äußere Einflüsse wie z.B. Vibrationen, Schockwellen u. ä. macht. Ferner gibt es durch die lokale Erhöhung der Masse durch die Spulen und die Spulenhalter sehr hohe Massesprünge im System "Messrohr-Fluid-Spule-Spulenhalter", sodass es während des Betriebs zu diversen Eigendynamik-Moden kommt, die das Messergebnis noch weiter verfälschen.

Auch taucht bei kleinen Coriolis-Massendurchflussmessgeräten nach dem Stand der Technik durch die Verkleinerung ein weiteres Problem auf. Maßabweichungen und Toleranzen bei der Fertigung und den Zusammenbau der immer kleiner werdenden Bauteile fangen an noch wichtiger zu werden als bei großen (groß dimensionierten) Messgeräten. Auch auf die Verkettung von Maßabweichungen und Toleranzen kommt es bei kleinen Messgeräten besonders an. Dies hat zur Folge, dass kleine Geräte in den meisten Fällen schwieriger in der Fertigung und meist auch ungenauer als größere Geräte sind.

Diese vorbeschriebenen Nachteile werden erfindungsgemäß dadurch vermieden, dass gerade auch die elektrisch ansteuerbaren Teile, die aufgrund der Funktion nicht einfach beliebig klein skaliert werden können und auch eine elektrische Anbindung an die Mess- und Auswerteelektronik benötigen, nicht mehr Teil des schwingenden Systems sind. Hierdurch werden die mechanischen Beanspruchungen (bspw. betreffend die Kabelanbindung) und der Einfluss auf das Messsystem (d.h. die schwingenden Messrohre) reduziert.

Die Schwingungserreger sind vorzugsweise derart zwischen den Messrohren angeordnet, dass die Schwingungserreger für das eine und das andere Messrohr bei der elektrischen Ansteuerung in einander entgegengesetzte Raumrichtungen auf die Messrohre einwirken. Dies hat zur Folge, dass bei einer gleichen und gleichzeitigen elektrischen Ansteuerung der Schwingungserreger die Messrohre gegenläufig in Schwingung versetzt werden, sodass bei durchströmendem fluidem Medium, durch die Phasenverschiebung der Signale aufgrund des Coriolis Effekts, der Durchfluss des fluiden Mediums in dem Massendurchflussmessgerät gemessen werden kann.

Als Schwingungserreger und Schwingsaufnehmer können erfindungsgemäß elektromagnetische Spulen verwendet werden, die bspw. für alle Schwingungserreger und Schwingungsaufnehmer baugleich sein können. Jede elektromagnetische Spule kann zum Erzeugen der Schwingung oder zum Aufnehmen der Schwingung mit einem an einem der Messrohre befestigten Permanentmagneten zusammenwirken. Bei der elektrischen Ansteuerung der als Schwingungserreger wirkenden Spule wird diese mit Strom beaufschlagt, erzeugt ein magnetisches Feld und bewegt dabei den an dem Messrohr festgelegten Permanentmagneten. Durch eine entsprechend eingestellte Beaufschlagung mit Strom kann so eine Schwingung des Messrohrs erzeugt werden. Umgekehrt bewirkt die durch die Schwingung des Messrohres hervorgerufene Bewegung des Permanentmagneten in der Spule einen Strom, der im Rahmen der elektrischen Ansteuerung der als Schwingungsaufnehmer wirkenden Spule gemessen werden kann, bspw. durch eine Strom- und/oder Spannungsmessung. Die Verwendung im Wesentlichen baugleicher oder völlig baugleicher Spulen hat den Vorteil, dass die die Schwingungserzeugung und Schwingungsaufnahme auf einfache Weise aufeinander abgestimmt sind. Die Permanentmagneten an den Messrohren können entsprechend der Größe und Masse der Messanordnung, und insbesondere der Messrohre, einfach mitskalieren und werden (anders als bspw. zur Ansteuerung elektrischer Bauteile verwendete Anschlusskabel) bei der Schwingung der Messrohre mechanisch nicht relativ zu den sie (d.h. die Permanentmagneten) tragenden Messrohren bewegt.

Gemäß einer bevorzugten Ausführungsform kann an dem Gehäusekörper eine Ankonstruktion (im Sinne eines Halters) befestigt sein, die die Schwingungserreger und Schwingsaufnehmer trägt (so, dass die Schwingungserreger und Schwingsaufnehmer an der Ankonstruktion festgelegt sind und zwischen den Messrohren angeordnet sind). Die Ankonstruktion kann durch stabile Bauteile, bspw. entsprechend massive und nicht flexible Befestigungselemente (wie Winkel, Stützen, Führungen, Platinenhalter, nicht flexible Platine), so ausgebildet sein, dass sie die bei der Erzeugung der Schwingung der Messrohre entstehenden Gegenkräfte abfängt und die Schwingungserreger und Schwingungsaufnehmer raumfest zum Gehäusekörper fixiert und deren (unerwünschte) mögliche Eigenschwingung dämpft bzw. aufnimmt. Die Ankonstruktion ist so ausgebildet, dass die Schwingungserreger und Schwingsaufnehmer in der erfindungsgemäß beschriebenen Weise zwischen den beiden Messrohren angeordnet sind.

In einer bevorzugten Weiterbildung der Erfindung kann die Ankonstruktion mindestens eine Platine aufweisen, auf der die elektrisch ansteuerbaren Schwingungserreger und Schwingsaufnehmer festgelegt und über auf der Platine ausgebildete Leiterbahnen ansteuerbar sind. Damit kann die gesamte Ansteuerung der Sensorkomponenten sowie ggf. der auch dort vorgesehenen Messelektronik über die Platine erfolgen. Es sind somit erfindungsgemäß keine mit der angeregten Schwingung der Messrohre mit-oszillierenden Drahtverbindungen oder sonstige elektrischen Verbindungen zu den Schwingungserregern und Schwingsaufnehmern, insbesondere den Spulen, oder anderen elektrischen oder elektronischen Komponenten des Messgeräts (Messelektronik) notwendig, die durch die Schwingungen mechanisch belastet werden und bspw. brechen können. Die Messelektronik auf der Platine kann auch weitere elektrische und/oder elektronische Komponenten, wie bspw. Prozessor, Sensor (bspw. ein Temperatursensor und/oder andere Sensoren), Auswertelektronik oder dgl. umfassen und in einen elektrischen Schaltkreis integriert werden, ohne dass in dem Messbereich zwischen den Messrohren eine Verdrahtung vorgenommen werden muss, die ggf. die Messung beeinflusst. Diese Anordnung macht es außerdem möglich, keine elektronisch oder elektrisch ansteuerbaren Komponenten an den Messrohren selbst anzubringen und damit deren Eigenfrequenz bei der Schwingung zu beeinflussen und dadurch Messergebnisse zu verfälschen bzw. entsprechende Korrekturen vorzusehen. Die Permanentmagnete, oder ggf. anstelle der Permanentmagnete an Messrohren vorgesehenen Ausgleichsgewichte, können überall gleich ausgebildet sein, so dass keine Änderung der Schwingungseigenschaften des einen relativ zu dem anderen Messrohr erzeugt wird. Außerdem können die Permanentmagnete auch so mit den Messrohren skalieren, dass das Gewicht der Permanentmagnete keine lokalen Änderungen der Schwingengen, bspw. lokale Schwingungen höherer Ordnung, hervorruft.

Gemäß einer bevorzugten Ausführungsform sind an mindestens einem Messrohr genau zwei Schwingungsaufnehmer angeordnet, wobei mindestens ein Schwingungserreger an einem Messrohr vorgesehen ist. Gemäß einer bevorzugten einfachen Ausführungsform kann ferner genau ein Schwingungserreger an jedem Messrohr vorgesehen sein, wobei auch Ausführungsformen sinnvoll sein können, bei denen genau zwei oder mehr Schwingungsaufnehmer und/oder Schwingungserreger einem Messrohr zugeordnet sind.

Bei einer einseitigen Phasenmessung (d.h. einer Schwingungsaufnahme an nur einem Messrohr) kann das Coriolis-Massendurchflussmessgerät damit insgesamt zwei Schwingungserreger (je einen pro Messrohr) und zwei Schwingsaufnehmer an einem der beiden Messrohre aufweisen, wobei Schwingungsaufnehmer für das andere Messrohr ggf. montiert sind, aber nicht angesprochen werden oder ansprechbar sind. Sofern nur eine einseitige Phasenmessung an einem Messrohr vorgesehen ist, können an dem anderen Messrohr anstelle der Permanentmagnete auch Ausgleichsgewichte angeordnet sein, vorzugsweise mit zu den Permanentmagneten gleichem Gewicht und an den gleichen Positionen.

Bei einer beidseitigen Phasenmessung (d.h. einer Schwingungsaufnahme an jedem Messrohr) kann das Coriolis-Massendurchflussmessgerät damit insgesamt zwei Schwingungserreger (je einen pro Messrohr) und vier Schwingsaufnehmer, d.h. zwei an jedem der beiden Messrohre, aufweisen.

Gemäß einer bevorzugten Ausführungsform kann der Schwingungserreger an dem (jedem) Messrohr in der Mitte zwischen den Enden des Messrohrs angeordnet sein, wobei sich die Bezeichnung "an dem Messrohr" auf die Position bezieht, nicht aber auf die Art der Befestigung, die erfindungsgemäß ja gerade an dem Grundkörper und nicht an dem Messrohr erfolgt. Dies gilt auch für den Schwingungsaufnehmer. Die Enden des Messrohres sind diejenigen Punkte auf beiden Seiten des Messrohres, an denen das Messrohr an dem Gehäusekörper fixiert ist. Durch Anordnung des Schwingungserregers in der Mitte zwischen diesen Punkten lässt sich mit der geringstmöglichen Krafteinwirkung eine bezogen auf die Abmessungen des Messrohrs symmetrische Schwingung des Messrohrs anregen.

Erfindungsgemäß bevorzugt kann ein Schwingungsaufnehmer an dem Messrohr zwischen dem einen Ende des Messrohres und dem Schwingungserreger angeordnet und ein anderer Schwingsaufnehmer an demselben Messrohr zwischen dem anderen Ende des Messrohres und dem Schwingungserreger angeordnet sein. Grundsätzlich ist die Phasenverschiebung am größten zwischen zwei Punkten, die symmetrisch zum Mittelpunkt des Messrohres, aber irgendwo zwischen Einlass und Mittelpunkt bzw. Auslass und Mittelpunkt, liegen. Eine häufig bevorzugte Anordnung kann etwa in der Mitte zwischen dem Schwingungserreger und Ende des Messrohrs sein, wobei etwa die Mitte bspw. eine Anordnung um die Mitte mit einer Schwankungsbreite um die tatsächliche Mitte von etwa 25% umfassen kann. Eine bspw. bevorzugte Anordnung kann etwa zwischen 10% und 15% aus der tatsächlichen Mitte, hin zu dem Schwingungserreger liegen. Die Anordnung ist jedoch auch von der Art und Form der Messrohre abhängig und kann von dem Fachmann jeweils entsprechend geeignet gewählt werden.

Gemäß einer Ausführungsform können die Messrohre parallel verlaufend angeordnet und die Permanentmagneten an den Messrohren einander gegenüberliegend befestigt und derart ausgerichtet sein, dass sich die Permanentmagneten anziehen oder abstoßen.

Eine besonders geeignete Form der Messrohre ist gebogen, weil durch die gebogene Führung des fluiden Mediums der Effekt der wirkenden Corioliskraft zwar möglicherweise relativ klein im Vergleich zu anderen Ausführungen ist, aber eine höhere Eigenfrequenz der Messrohre bedingt. Das präzisere mechanische Verhalten der Messrohre bringt auch messtechnische Vorteile. Beispielsweise können die Messrohre im Wesentlichen u-förmig ausgebildet sein, wobei die auslaufenden Schenkel des "u", mit denen das Messrohr an dem Grundkörper festgelegt sind, kürzer oder länger sein können, als bei einem buchstabenüblichen "u". Eine u-Form mit im Vergleich zu einem buchstabenüblichen "u" kürzen Schenkel ist hier eine bevorzugte Ausführungsform.

Eine erfindungsgemäß besonders bevorzugte Ausführung sieht vor, dass der Gehäusekörper des Coriolis-Massendurchflussmessgerät als massiver Materialblock, vorzugsweise als massiver einteiliger Materialblock, ausgebildet ist, in den als Strömungseinlass und als Strömungslauslass auf einander gegenüberliegenden Stirnseiten jeweils eine Öffnung eingelassen ist, wobei jeweils zwei Strömungskanäle aus jeder Öffnung zu einem Ausgang in einer Seitenfläche des Gehäusekörpers führen und wobei der Ausgang eines der Strömungskanäle in das eine Messrohr und der Ausgang des anderen der Strömungskanäle in das andere Messrohr mündet. In einer solchen Ausgestaltung bilden die Strömungskanäle Strömungsteiler, an die die Messrohre angeschlossen sind. Ein erfindungsgemäß massiver Grundkörper weist den Vorteil einer - im Vergleich zu den in Schwingung versetzten Messrohren - hohe Masse auf, so dass hierdurch unerwünschte Eigenschwingungen des Messgeräts oder dessen Komponenten (nicht die Messrohre) minimiert werden.

Anstelle eines massiven Gehäusekörpers gemäß der zuvor beschriebenen besonders bevorzugten Ausführungsform kann erfindungsgemäß als Strömungseinlass und Strömungsauslass auch jeweils ein - aus dem Stand der Technik bereits bekannter - Strömungsteiler vorgesehen sein, an dem die Messrohre festgelegt sind. Auch so lässt sich ein vergleichbares Schwingungsverhalten der Messrohre erreichen.

Zusätzlich, auch unabhängig von dem Vorsehen eines Strömungsteilers, können die Messrohre (auch bei dem den bevorzugt vorgeschlagenen massiven Materialblock) durch Koppelelemente, bspw. in Form von Querstreben oder Knotenbelche miteinander verbunden sein. Auch dies fördert ein vergleichbares Schwingungsverhalten der Messrohre.

Ein Vorteil des erfindungsgemäß bevorzugt vorgeschlagenen massiven Materialblocks als Gehäusekörper liegt aber auch darin, dass auf alle diese zuvor erwähnten Zusatzelemente (separater Strömungsteiler, Koppelelemente) verzichtet werden kann, weil bei der Fortführung dieses erfindungsgemäßen Gedankens die Enden des Messrohrs direkt an dem massiv ausgebildeten Gehäusekörper festgelegt sein können, und zwar bevorzugt derart, dass ein Ausgang eines Strömungskanals und eine Öffnung am Ende eines Messrohrs aufeinanderliegen. Die Ausgänge der Strömungskanäle und die Öffnungen der Messrohre sind vorzugsweise gleich groß, um ein gleichmäßiges Strömungsverhalten des fluiden Mediums beim Übergang zwischen Strömungskanal und Messrohr zu erreichen. Dabei verbindet ein Messrohr jeweils den Ausgang eines Strömungskanals des Strömungseinlasses und den Ausgang eines Strömungskanals des Strömungsauslasses des Coriolis-Massendurchflussmessgeräts.

Eine konstruktiv einfache und günstige Befestigung der Messrohre sieht vor, dass die Enden des (eines jeden) Messrohrs mit dem Gehäusekörper (oder gleichbedeutend mit dem Strömungsteiler des Gehäusekörpers, wenn kein massiver Gehäusekörper vorgesehen ist) verschweißt sind, wobei an dem Gehäusekörper (oder gleichbedeutend an dem Strömungsteiler des Gehäusekörpers) Zusatzmaterial für das Ausbilden der Schweißnaht bereitgestellt wird, wobei das Zusatzmaterial insbesondere durch das Material des Grundköpers gebildet ist. Bei einer normalen Schweißnaht wird mit einem von außen an den Schweißreich angelegten Draht geschweißt. Dies kann bei einer dünnen Schweißnaht sehr aufwendig und technisch schwierig sein. Erfindungsgemäß kann das Zusatzmaterial für das Ausbilden der Schweißnaht dadurch zur Verfügung gestellt werden, dass in den massiven Gehäusekörper (Materialblock) ein runder Kanal (im Sinne einer Nut) gefräst wird bzw. ist, der in der Mitte einen ringförmigen Kragen um den Strömungskanal bildet. Dieser ringförmige Kragen ist dann das Zusatzmaterial, das statt des Schweißdrahtes verwendet wird, um die Schweißnaht zwischen dem Messrohr und dem durch den massiven Materialblock gebildeten Grundkörper auszubilden. Weil somit erfindungsgemäß auf den zusätzlichen Schweißdraht verzichtet werden kann, wird das Verschweißen des Messrohres mit dem Grundkörper merklich vereinfacht.

In dem massiven Gehäusekörper kann eine Kabeldurchführung zwischen der Öffnung des Strömungseinlasses und der Öffnung des Strömungsauslasses ausgebildet sein, die sich von der Seitenfläche mit den Ausgängen der Strömungskanäle zu der gegenüberliegenden Seitenfläche erstreckt. Durch diese Kabeldurchführung können Kabel von der Platine, auf der die Schwingungserreger und die Schwingungsaufnehmer elektrisch ansteuerbar festgelegt sind, zu einem Geräteanschluss geführt werden. Der Geräteanschluss kann bspw. auch ein in die Kabeldurchführung aufgenommener Steckverbinder sein. Es ist auch möglich, durch die Kabelführung eine kabelgebundene Verbindung zu Komponenten der Messelektronik, bspw. einem Steuerprozessor oder Steuerrechner (innerhalb oder außerhalb des Messgeräts), herzustellen.

Gemäß einer bevorzugten Ausführungsform kann auch vorgesehen sein, dass auf der Platine Komponenten der Messelektronik, bspw. ein Steuerprozessor, Steuerelektronik, Auswertelektronik, Sensoren, wie bspw. Temperatursensoren, angeordnet sind. Die Messelektronik wird in der Fachwelt auch als Messumformer bezeichnet, im Sinne einer Messelektronik, die steuert, misst, umrechnet und/oder kommuniziert. Durch Integration von Messelektronik auf die Platine ergibt sich eine besonders kompakte Bauform des Coriolis-Massendurchflussmessgeräts, bei der die gesamte oder ein Teil der Messelektronik direkt in das Durchflussmessgerät integriert sein kann. Durch die Kabeldurchführung und/oder auf der Platine selbst angeordnete elektrische oder elektronische Komponenten der Messelektronik werden lose Kabelverbindungen im Messraum des Durchflussmessgeräts vermieden, die die Messungen beeinträchtigen oder aufgrund der in dem Messraum angeregten Schwingungen beschädigt werden könnten.

Weitere Merkmale, Vorteile und Anwendungsmöglichkeiten der Erfindung ergeben sich auch aus dem nachfolgend mit Bezug auf die Zeichnung beschriebenen Ausführungsbeispiel der Erfindung. Dabei bilden alle beschriebenen oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: perspektivisch ein Coriolis-Massendurchflussmessgerät nach dem Stand der Technik;
- Fig. 2: perspektivisch ein Coriolis-Massendurchflussmessgerät gemäß einer Ausführungsform der Erfindung;
- Fig.3: eine Aufsicht von oben des Coriolis-Massendurchflussmessgeräts gemäß Fig. 2;
- Fig. 4: perspektivisch das Coriolis-Massendurchflussmessgerät gemäß Fig. 2 ohne Schwingungserreger, Schwingungsaufnehmer und Ankonstruktion;
- Fig. 5: perspektivisch die Schwingungserreger, Schwingungsaufnehmer und Teile der Ankonstruktion des Coriolis-Massendurchflussmessgeräts gemäß Fig. 2;
- Fig. 6: eine Seitenansicht des Coriolis-Massendurchflussmessgeräts gemäß Fig. 2;
- Fig. 6a: einen Querschnitt durch das Coriolis-Massendurchflussmessgerät entlang Schnitt A-A gemäß Fig. 2;
- Fig. 6b: einen Querschnitt durch das Coriolis-Massendurchflussmessgerät entlang Schnitt B-B gemäß Fig. 2;
- Fig. 7: einen Längsschnitt durch die Mitte des Coriolis-Massendurchflussmessgeräts gemäß Fig. 2;
- Fig. 8: perspektivisch das Coriolis-Massendurchflussmessgerät gemäß Fig. 4 ohne Schwingungserreger, Schwingungsaufnehmer und Ankonstruktion mit einer Detaildarstellung zur Befestigung der Messrohre; und
- Fig. 9: perspektivisch das Coriolis-Massendurchflussmessgerät gemäß Fig. 2 mit montiertem Gehäusedeckel.

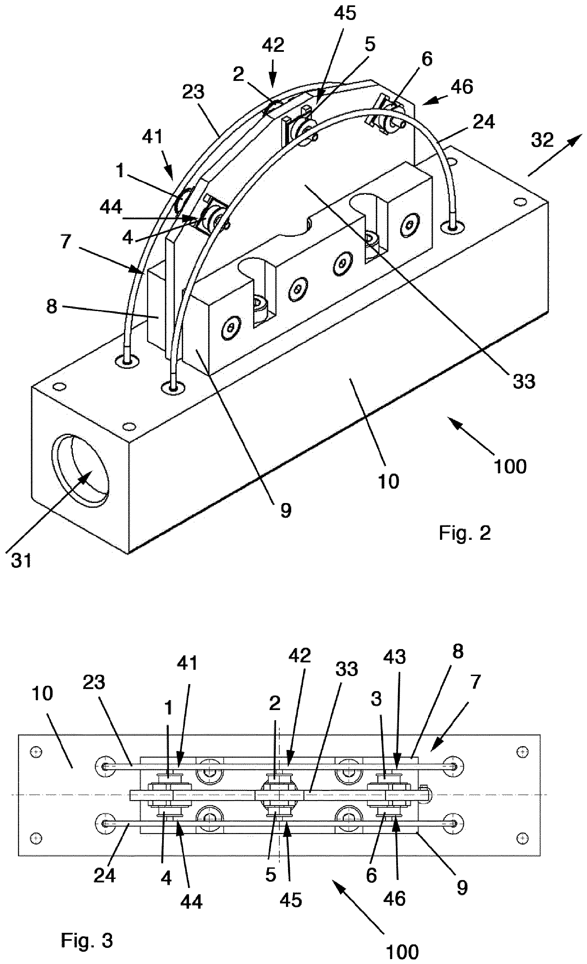

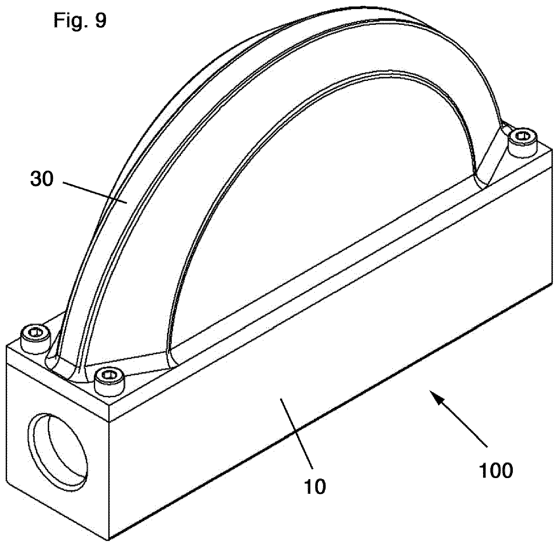

Fig. 2 zeigt perspektivisch ein Coriolis-Massendurchflussmessgerät 100 nach einer bevorzugten Ausführungsform der vorliegenden Erfindung ohne den (in Fig. 9 mit dargestellten) Gehäusedeckel 30. An einem Gehäusekörper 10, der einen Strömungseinlass 31 und einen Strömungsauslass 32 für ein fluides Medium aufweist, sind beabstandet voneinander und parallel verlaufend zwei Messrohre 23, 24 angeordnet, die an dem Gehäusekörper 10 festgelegt sind und jeweils den Strömungseinlass 31 und den Strömungsauslass 32 miteinander verbinden.

Für das erste Messrohr 23 ist als elektrisch ansteuerbarer Schwingungserreger 42 eine elektromagnetische Spule 2, und für das zweite Messrohr 24 ist als elektrisch ansteuerbarer Schwingungserreger 45 eine elektromagnetische Spule 5 vorgesehen. Jeder der Schwingungserreger 42, 45 ist dazu eingerichtet ist, das im zugeordnete Messrohr 23, 24 in Schwingung zu versetzen, vor dem er angeordnet ist.

Ferner sind in dem dargestellten Ausführungsbeispiel für jedes Messrohr 23, 24 jeweils zwei elektrisch ansteuerbare Schwingungsaufnehmer 41, 43 (in Fig. 3 sichtbar, in Fig. 2 verdeckt), 44, 46 vorgesehen, wobei die Schwingungsaufnehmer 41, 43, 44, 46 dazu eingerichtet sind, die Schwingung mindestens eines der beiden Messrohre 23,24 aufzunehmen. Die Schwingungsaufnehmer 41, 43, 44, 46 sind jeweils als elektromagnetische Spulen 1, 3 (in Fig. 3 sichtbar, in Fig. 2 verdeckt), 4, 6 ausgebildet.

Wie man sofort erkennt, sind die Spulen 1, 2, 3, 4, 5, 6 nicht an den Messrohren 23, 24 selbst, sondern an einer Ankonstruktion 7 befestigt, die zwischen den beiden Messrohren 23, 24 angeordnet ist und über Befestigungselemente 8, 9 der Ankonstruktion 7 fest mit einem Teil des Gehäuses, d.h. raumfest mit dem Gehäusekörper 10, verbunden ist. In der dargestellten Ausführung umfasst die Ankonstruktion 7 eine Platine 33 mit darauf gedruckten elektrischen Leitungen (nicht dargestellt), die mit den Spulen 1, 2, 3, 4, 5, 6 (d.h. mit anderen Worten den Schwingungserregern 42, 44 und Schwingsaufnehmern 41, 43, 44, 46; diese Begriffe werden im Rahmen der Beschreibung der Ausführungsformen synonym mit Spule verwendet) und bspw. mit weiterführenden Leitungen (ebenfalls nicht dargestellt) im Inneren des Messgerätes 100 oder externen Anschlüssen verbunden bzw. verbindbar sind.

Bei dieser Ausführungsform sind die Spulen 1, 2, 3, 4, 5, 6 auf die Platine 33 gelötet. Die Erfindung schließt aber genauso auch andere Ausführungen mit ein, bei denen die Spulen 1, 2, 3, 4, 5, 6 verschraubt, geklebt oder mit anderen Verbindungstechniken auf der Platine 33 oder anderen Elementen der Ankonstruktionen 7 befestigt sind.

Fig. 3 zeigt das Coriolis-Massendurchflussmessgerät 100 von oben, so dass auch der Schwingungsaufnehmer 43 (Spule 3) sichtbar ist.

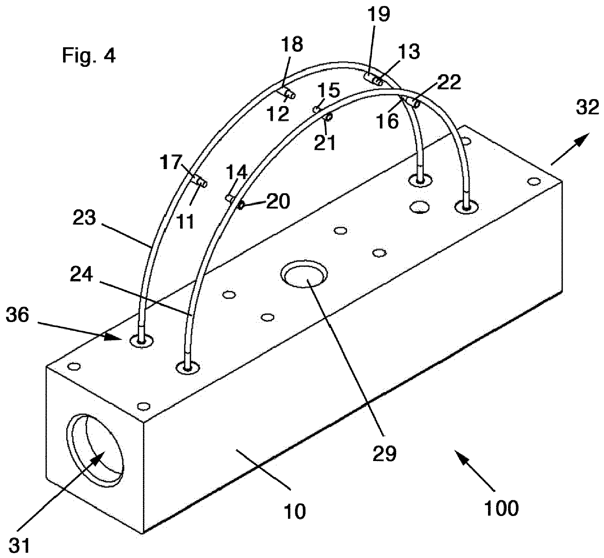

Fig. 4 zeigt das gleiche Coriolis-Massendurchflussmessgerät 100 ohne die Ankonstruktion 7 mit der Platine 7 und den Befestigungselementen 8, 9, sodass Permanentmagnete 11, 12, 13, 14, 15, 16 und die Magnethalter 17, 18, 19, 20, 21, 22 besser sichtbar werden, die entsprechend der Position der Spulen 1, 2, 3, 4, 5, 6 an den Messrohren 23, 24 festgelegt sind, um magnetisch mit den Spulen 1, 2, 3, 4, 5, 6 zusammenzuwirken, wenn die Spulen 2, 5 mit Strom angesteuert (beaufschlagt) werden (Schwingungserreger 42, 45) oder in den Spulen 1, 3, 4, 6 durch eine Bewegung der Permanentmagnete 11, 13, 14, 16 induzierte Spannung bzw. ein induzierter Strom gemessen wird (Schwingungsaufnehmer 41, 43, 44, 46).

Bei den Messrohren 23, 24 handelt es sich bei dieser Ausführung um zwei kurze U-Rohre (u-förmig gebogene Rohre). Koppelelemente zur Kopplung der Schleifen werden bei dieser Ausführung nicht benutzt. Die Erfindung schließt aber genauso auch andere Ausführungen mit ein, die mit Messrohren 23, 24 anderer Form ausgeführt sind und/oder bei denen die Messrohre 23, 24 miteinander mit Koppelelementen (ähnlich der Darstellung in Fig. 1 zum Stand der Technik) gekoppelt bzw. miteinander verbunden sind.

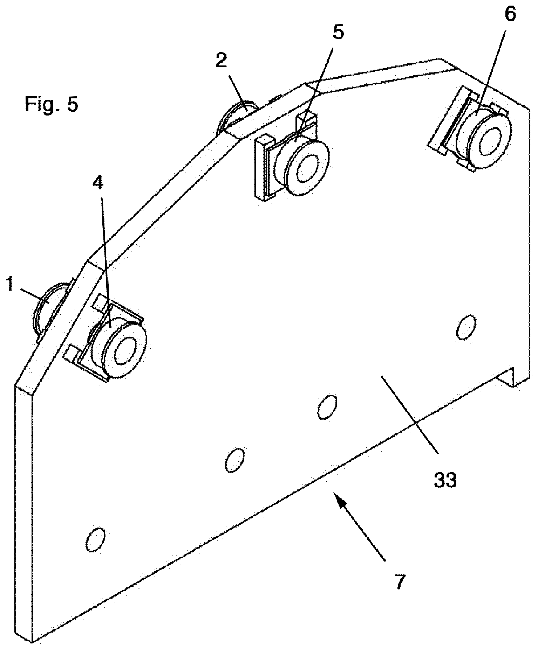

Fig. 5 zeigt der Übersichtlichkeit halber nur die Platine 33 der Ankonstruktion 7 mit den darauf befestigten, nicht beweglichen, d.h. raumfesten, Spulen 1, 2, 3, 4, 5, 6, wobei die Spule 3 nicht sichtbar ist und die Leiterbahnen auf der Platine 33 nicht dargestellt sind.

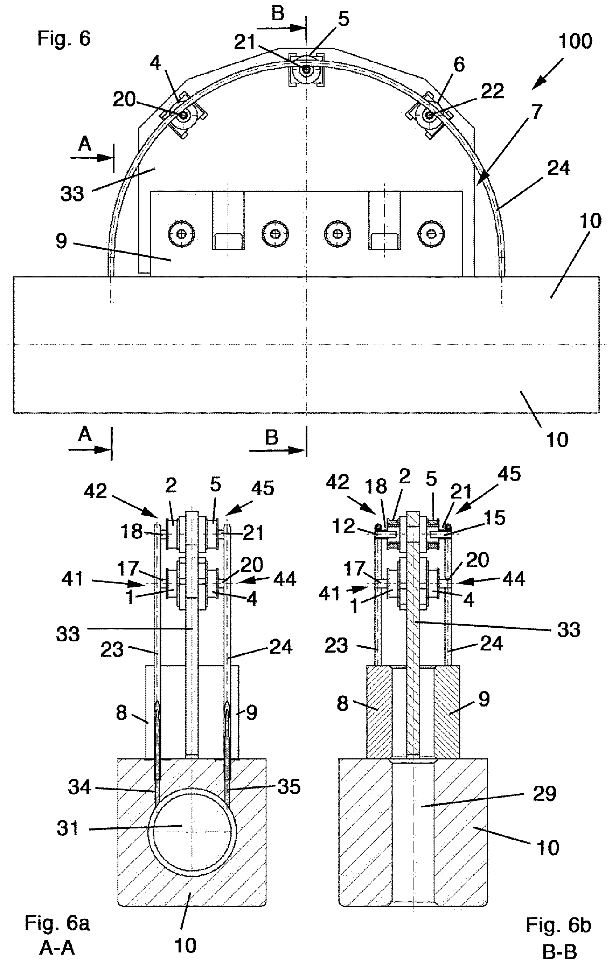

In Fig. 6 ist eine Seitenansicht des Coriolis-Massendurchflussmessgeräts 100 dargestellt, in der hinter dem sich von dem Gehäusekörper 10 erstreckenden Messrohr 24 die Ankonstruktion 7 mit der durch das Befestigungselement 9 durch Verschrauben an dem Gehäusekörper 10 gehaltenen Platine 33 sichtbar ist. Auf der Platine 33 sind die Spulen 4, 5, 6 jeweils genau vor dem Messrohr 24 festgelegt, und zwar derart, dass die in den Magnethaltern 20, 21, 22 an dem Messrohr 24 gehaltenen, in Fig. 6 nicht sichtbaren Permanentmagnet 14, 15, 16 gerade in die Wicklungen der Spulen 4, 5, 6 eintauchen.

Dies verdeutlicht auch der Querschnitt nach Fig. 6a entlang der Linie A-A gemäß Fig. 6, der die auf der Platine 33 vor den Messrohren 23 respektive 24 raumfest montierten Spulen 1, 2 respektive 4, 5 mit den jeweils zugehörigen Magnethaltern 17, 18 respektive 20, 21 zeigt. Die Permanentmagnete 11, 12, 14, 15 sind jeweils in die Wicklungen der Spulen 1, 2, 4, 5 eingetaucht und nicht sichtbar. Der Querschnitt nach Fig. 6b entlang der Linie B-B gemäß Fig. 6 zeigt zudem unter anderem einen Schnitt durch die Spulen 2, 5 und die Magnete 12, 15 der Schwingungserreger 42, 45.

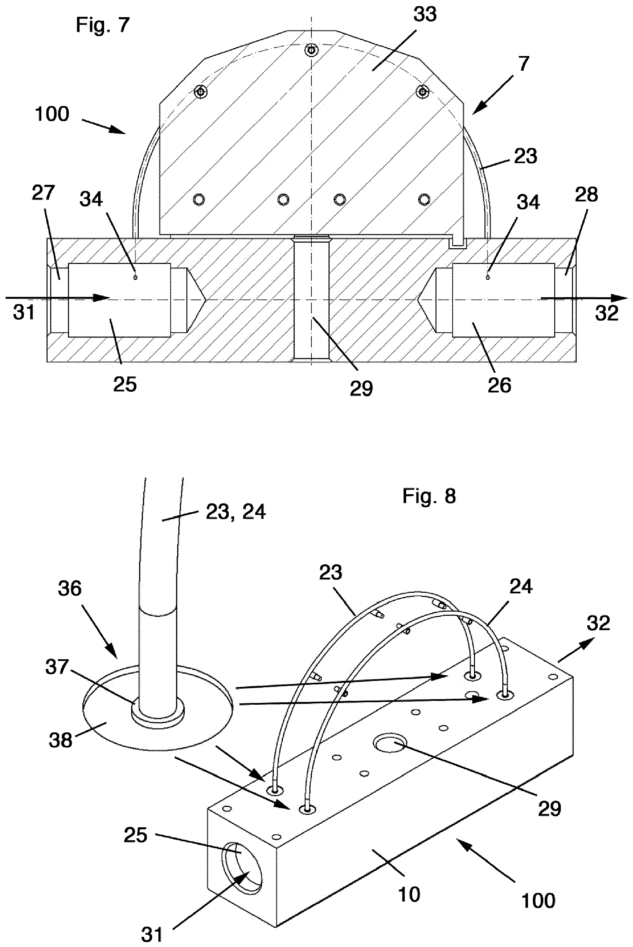

Fig. 7 zeigt einen Längsschnitt durch die Mitte des Coriolis-Massendurchflussmessgeräts 100. Am Längsschnitt in Fig. 7 und an dem Schnitt "A-A" in Fig. 6 sieht man, dass die dargestellte Ausführungsform ohne bei Coriolis- Massendurchflussmessgeräten 100' nach dem Stand der Technik übliche separate Strömungsteiler (vgl. Fig. 1 - 5', 6') am Strömungseinlass 31 und Strömungsauslass 32 auskommt, denn die Teilung der Strömung des fluiden Messmediums am Strömungseinlass 31 auf die zwei Messrohre 23, 24 und die Zusammenführung dieser am Strömungsauslass 32 erfolgt bei der dargestellten Ausführung direkt in der Öffnung 25 des Strömungseinlasses 31 und in der Öffnung 26 des Strömungsauslasses 32, mithin also in dem massiv ausgebildeten Gehäusekörper 10 durch Strömungskanäle 34, 35, die von einer Seitenfläche des Gehäusekörpers 10 in die Öffnungen 25, 26 münden (vgl. auch Fig. 6a). Die Erfindung schließt aber genauso auch andere Ausführungen ein, die in Sachen Strömungsteiler von der hier dargestellten Ausführung abweichen. Auch hat das Messgerät 100 bei der dargestellten Ausführungsform keine bevorzugte Strömungsrichtung, d.h. Strömungseinlass 31 und Strömungsauslass 32 können auch getauscht sein. Die Erfindung schließt aber genauso auch andere Ausführungen mit ein, bei denen Strömungseinlass 31 und Strömungsauslass 32 zwecks Strömungsoptimierung unterschiedlich sein können, und somit die Strömungsrichtung vorgegeben ist.

Ferner, verfügt die in Fig. 7 dargestellte Ausführungsform einlass- und auslassseitig über Gewindeanschlüsse 27, 28, an denen Prozessanschlüsse verschraubt werden können. Die Erfindung schließt aber genauso auch andere Ausführungen mit ein, z.B. ganz ohne Prozessanschlüsse, d.h. mit direktem Anschluss an der Prozessleitung oder mit geschweißten oder anders (durch andere Verbindungstechniken) angeschlossenen Prozessanschlüssen.

Fig. 7 zeigt auch eine mögliche Ausführung für eine Kabeldurchführung 29 zum Durchführen von Kabeln vom Inneren des Coriolis-Massendurchflussmessgeräts 100 nach außen, z.B. zu einer Messelektronik, zur Stromversorgung, zur Signalweiterführung in Fällen, in denen die Messelektronik sich im Inneren des Gerätes befindet, z.B. auf der Platine 33 mit integriert ist. Die Erfindung schließt aber genauso auch andere Ausführungen mit ein, bei denen die Durchführung von Kabeln an anderer Stelle und in anderer Richtung erfolgt.

Fig. 8 zeigt Details der Verbindung der Messrohre 23, 24 mit dem massiven Gehäusekörper 10. Bei der dargestellten Ausführungsform sind die Messrohre 23, 24 mit dem Gehäusekörper 10 ohne von außen zugegebenes Zusatzmaterial verschweißt. Das zur Ausbildung einer besonders haltbaren Schweißverbindung erforderliche Zusatzmaterial, üblicherweise ein Schweißdraht, wird bei dieser Ausführung von einem Teil 36 des Gehäusekörpers 10 durch eine besondere Ausbildung in diesem Bereich (Vergrößerung in Fig. 8) bereitgestellt. Konkret ist als Teil 36 ein Kragen 37 vorgesehen, der in den massiven Gehäusekörper 10 (Materialblock) als Rand eines runden Kanals 38 (im Sinne einer Nut) gefräst wird bzw. ist. In der Mitte des ringförmigen Kragens 38 ist der Strömungskanal 34, 35 ausgebildet. Dieser ringförmige Kragen 38 bildet dann das in den Grundkörper 10 integrierte Zusatzmaterial, das statt des extern angelegten Schweißdrahtes verwendet wird, um die Schweißnaht zwischen dem Messrohr 23, 24 und dem durch den massiven Materialblock gebildeten Grundkörper 10 auszubilden. Die Erfindung schließt aber genauso auch andere Ausführungen von Verbindung mit ein, z.B. durch Schweißen mit Zusatzmaterial, durch Löten, durch Kleben oder durch andere Verbindungstechniken.

Fig. 9 zeigt perspektivisch ein Coriolis-Massendurchflussmessgerät 100 nach Ausführungsform der vorliegenden Erfindung mit Gehäusedeckel 30. Man erkennt, dass das Gehäuse in der dargestellten Ausführung, wenn man von einer dazwischenliegenden Dichtung absieht (nicht dargestellt), aus lediglich zwei miteinander verschraubten Teilen besteht, dem Gehäusekörper 10 mit den zuvor beschriebenen Komponenten und dem den Messbereich das Gehäusekörpers 10 abdeckenden und schützenden Gehäusedeckel 30. Die Erfindung schließt aber genauso auch andere Ausführungen mit ein, bei denen bspw. der Gehäusekörper 10 und der Gehäusedeckel 30 miteinander verschweißt oder sonstwie miteinander verbunden sind.

Der Gehäusekörper 10 ist massiv ausgebildet und hat in der hier dargestellten Ausführungsform das äußere Erscheinungsbild eines einfachen Blocks. Die Erfindung schließt aber genauso auch andere Ausführungsformen mit ein, bei denen das äußere Erscheinungsbild kein Block ist, z.B. um die Platine 33 (oder sonstige Ankonstruktion 7) durch eine besondere Formgebung des Gehäusekörpers 10 direkt (d.h. ohne die Befestigungselemente 8, 9) an dem Gehäusekörper 10 zu befestigen oder weitere spezielle Formgebungen, um z.B. das Coriolis-Massendurchflussmessgerät 100 an einem Ständer oder an einer Wandbefestigung zu befestigen.

Während ein (von einer dazwischenliegenden Dichtung abgesehen) aus nur zwei Teilen bestehendes Gehäuse diverse Vorteile hat, schließt die Erfindung aber genauso auch andere Ausführungen mit ein, die ein aus mehr als zwei Einzelteilen bestehendes Gehäuse vorsehen.

Bei einem Coriolis-Massendurchflussmessgerät 100 nach der vorliegenden Erfindung, bei dem die Spulen 1, 2, 3, 4, 5, 6 nicht mehr an einem der Messrohre 23, 24, sondern raumfest an dem Gehäusekörper 10 (bspw. einer Ankonstruktion 7 bzw. einer Platine 33 der Ankonstruktion 7) festgelegt sind, müssen auch bei einem kleinen oder sehr kleinen Coriolis-Massendurchflussmessgerät 100 diese Spulen nicht auf schwer zu handhabende Maße verkleinert werden. In den meisten Fällen können sogar handelsübliche Spulen verwendet werden. Es sind somit keine exotischen Herstellungsverfahren für Spulen und deren Befestigung an den Messrohren, und auch keine anderen exotische Schwingungserreger- und Schwingungsaufnehmer-Prinzipien notwendig. Dadurch sind kleine und sehr kleine Coriolis-Massendurchflussmessgeräte 100 nach der vorliegenden Erfindung messgenauer, zuverlässiger und wirtschaftlicher in der Herstellung als solche nach dem Stand der Technik.

Coriolis- Massendurchflussmessgeräte 100 nach der vorliegenden Erfindung sind aber auch aus noch einem weiteren Grund zuverlässiger als solche nach dem Stand der Technik: Weil die elektrisch ansteuerbaren Spulen 1, 2, 3, 4, 5, 6 (bzw. allgemeiner Schwingungserreger 42, 45 und Schwingsaufnehmer 41, 43, 44, 46) raumfest relativ zu dem Gehäuseköper 10 fixiert sind, gibt es auch keine oszillierenden Verbindungsdrähte von den Spulen 1, 2, 3, 4, 5, 6 oder anderen elektrisch ansteuerbaren elektrischen oder elektronischen Komponenten zu weiterführenden Leitungen, und wenn es keine oszillierenden Verbindungsdrähte gibt, dann brechen diese auch nicht. Verbindungsdrähte lassen sich auch nicht beliebig dick machen, denn schon ab einer sehr geringen Steifigkeit beeinflussen Verbindungsdrähte die Eigenfrequenz des betreffenden Messrohres merklich und führen zu Verfälschungen bei der Messung. Das erfindungsgemäße Fehlen solcher Verbindungsdrähte führt damit auch schon für sich genommen zu qualitativ besseren Messergebnissen.

Bei einem Coriolis-Massendurchflussmessgerät 100 nach der vorliegenden Erfindung tragen die Messrohre 23, 24 nur die Permanentmagnete 11, 12, 13, 14, 15, 16 und deren zugehörige Magnethalter 17, 18, 19, 20, 21, 22. Dadurch erhält man bei kleinen und sehr kleinen Massendurchflussmessgeräten 100 ein sehr leichtes System "Messrohr-Fluid-Permanentmagnet-Magnethalter", wie z.B. aus Fig. 4 sofort ersichtlich wird. Dieses System "Messrohr-Fluid-Permanentmagnet-Magnethalter" weist darüber hinaus durch die an den Messrohren 23, 24 fehlenden Spulen 1, 2, 3, 4, 5, 6 mit den zugehörigen Spulenhalterungen auch kaum lokale Massensprünge auf, die durch die vergleichsweise schwere Spulentechnik im Stand der Technik immer wieder, und das sogar bei größeren Messgeräten, auftreten. Damit weist ein erfindungsgemäßes Coriolis-Massendurchflussmessgerät 100 eine einfachere, kalkulierbarere Eigendynamik auf. Durch die fehlenden Spulen 1, 2, 3, 4, 5, 6 und Spulenhalterungen an den Messrohren 23, 24 erfahren letztere auch weitaus kleinere oszillierende aerodynamische Kräfte (Fächerwirkung). Durch das Fehlen dieser störenden Effekte, d.h. der schwierig zu kontrollierenden Eigendynamik und der höheren aerodynamischen Dämpfung, sind Coriolis-Massendurchflussmessgeräte 100 nach der vorliegenden Erfindung insgesamt messgenauer als solche nach dem Stand der Technik.

Weil das System "Messrohr-Fluid-Magnet-Magnethalter" weitaus leichter ist und deswegen eine weitaus höhere Eigenfrequenz aufweist als die schwereren Systeme nach dem Stand der Technik, arbeiten Coriolis-Massendurchflussmessgeräte 100 nach der vorliegenden Erfindung bei höheren Frequenzen, so z.B. erfindungsgemäß im Bereich von 200 Hz oder bei noch höheren Frequenzen, als solche nach dem Stand der Technik. Dadurch sind Coriolis-Massendurchflussmessgeräte 100 nach der vorliegenden Erfindung nicht nur messgenauer, sondern auch weniger empfindlich gegen äußere Einflüsse wie z.B. Vibrationen, Schockwellen u. ä. als solche nach dem Stand der Technik.

Coriolis-Massendurchflussmessgeräte 100 nach der vorliegenden Erfindung haben auch eine komplett neue minimalistische Architektur für diese Messgerätegattung. Sie weisen zwar mehr Spulen 1, 2, 3, 4, 5 ,6 und Permanentmagnete 11, 12, 13, 14, 15, 16 als solche nach dem Stand der Technik auf. Maßabweichungs- und toleranzkritische Bauteile sind aber auf eine sehr kleine Zahl reduziert. So kann ein (bis auf eine Dichtung) lediglich zweiteiliges Gehäuse (Gehäusekörper 100 und Gehäusedeckel 30) zum Einsatz kommen mit einem massiven Grund- bzw. Gehäusekörper 10, der es erlaubt, auf Strömungsteiler und Koppelelemente für die Messrohre 23, 24 zu verzichten. Die Möglichkeit der Benutzung einer bedruckten Platine 33 statt innerer Verdrahtung, die bei Coriolis-Massendurchflussmessgeräten nach dem Stand der Technik anzutreffen ist, reduziert weiter an dem Grundkörper 100 angeordnete bewegliche oder schwingbare Komponenten. Je weniger Bauteile bzw. Komponenten verwendet werden, desto weniger Maßabweichungen und Toleranzen können in der Produktion der Einzelteile und Zusammenbau der Geräte auftreten. Auch aus diesem Grund sind Coriolis-Massendurchflussmessgeräte 100 nach der vorliegenden Erfindung, insbesondere bei kleinen und sehr kleinen Messgeräten 100, messgenauer und zuverlässiger als solche nach dem Stand der Technik.

Bei Coriolis-Massendurchflussmessgeräten 100 nach der vorliegenden Erfindung sind sowohl eine einseitige Phasenmessung, d.h. an nur einem der zwei Messrohre 23, 24, als auch eine beidseitige Phasenmessung, d.h. an jedem der zwei Messrohre 23, 24, möglich. Die Anzahl der benutzten Spulen 1, 2, 3, 4, 5, 6 kann entsprechend variieren. So sind z.B. bei beidseitiger Phasenmessung insgesamt sechs Spulen, d.h. zwei für die beiden Schwingungserreger 42, 45 und zwei-Mal-zwei für die vier Schwingungsaufnehmer 41, 43, 44, 46, wie in den Fig. 2 und 3 abgebildet, notwendig.

Bei einseitiger Phasenmessung sind dagegen nur vier Spulen 1, 2, 3, 5 notwendig, d.h. zwei Spulen 2, 5 für die beiden Schwingungserreger 42, 45 und 2 für die zwei Schwingungsaufnehmer41, 43. In diesem Fall (der einseitigen Phasenmessung) können zwei Spulen, z.B. Spulen 1, 3 oder Spulen 4, 6 entweder fehlen oder vorhanden, aber nicht geschaltet oder angeschlossen sein. In diesem Fall (der einseitigen Phasenmessung) macht es auch Sinn, die gegenüber der fehlenden (oder nicht geschalteten) Spulen 1, 3 oder 4, 6 liegenden Permanentmagnete, d.h. Permanentmagnete 11, 13 oder 14, 16 durch nicht magnetische Körper gleicher Form und Masse zu ersetzen.

Bei Coriolis-Massendurchflussmessgeräten 100 nach der vorliegenden Erfindung können einander gegenüberliegende Spulen 1, 4; 2, 5; 3, 6 elektrisch, je nach gewünschter Art der Schwingungserregung und der Phasenmessung, miteinander parallel oder in Reihe geschaltet sein. In Reihe geschaltete Spulen können (paarweise) auch zu einer (z.B. längeren) Spule zusammengefasst sein. Einander gegenüberliegende Permanentmagnete 11, 14; 12, 15; 13, 16 können (je nach Spulenkonfiguration und Schaltung) abstoßend (d.h. -/- oder +/+) oder anziehend (+/- oder -/+) eingebaut sein.

Um die Magnetfelder einander gegenüberliegender Permanentmagnete 11, 14; 12, 15; 13, 16 abzuschirmen, können (z.B. bei starken Permanentmagneten) erfindungsgemäß auch magnetisch abschirmende Folien und sonstige magnetisch abschirmende Elemente zum Einsatz kommen.

### Bezugszeichenliste

- 1: Spule
- 2: Spule
- 3: Spule
- 4: Spule
- 5: Spule
- 6: Spule
- 7: Ankonstruktion
- 8: Befestigungselement
- 9: Befestigungselement
- 10: Gehäusekörper
- 11: Permanentmagnet
- 12: Permanentmagnet
- 13: Permanentmagnet
- 14: Permanentmagnet
- 15: Permanentmagnet
- 16: Permanentmagnet
- 17: Magnethalter
- 18: Magnethalter
- 19: Magnethalter
- 20: Magnethalter
- 21: Magnethalter
- 22: Magnethalter
- 23: Messrohr
- 24: Messrohr
- 25: Öffnung des Strömungseinlasses 31
- 26: Öffnung des Strömungsauslasses 32
- 27: Gewindeanschluss
- 28: Gewindeanschluss
- 29: Kabeldurchführung
- 30: Gehäusedeckel
- 31: Strömungseinlass
- 32: Strömungsauslass
- 33: Platine
- 34: Strömungskanal zum Messrohr 23
- 35: Strömungskanal zum Messrohr 24
- 36: Teil des Gehäuses bildendes Zusatzmaterial
- 37: Kragen
- 38: runder Kanal

- 41: Schwingungsaufnehmer
- 42: Schwingungserreger
- 43: Schwingungsaufnehmer
- 44: Schwingungsaufnehmer
- 45: Schwingungserreger
- 46: Schwingungsaufnehmer

- 100: Coriolis-Massendurchflussmessgerät

## Patentansprüche

1. Coriolis-Massendurchflussmessgerät mit
- einem Gehäusekörper (10), der einen Strömungseinlass (31) und einen Strömungsauslass (32) für ein fluides Medium aufweist,
- zwei beabstandet voneinander angeordneten Messrohren (23, 24), die an dem Gehäusekörper (10) festgelegt sind und den Strömungseinlass (31) und den Strömungsauslass (32) miteinander verbinden,
- mindestens einem elektrisch ansteuerbaren Schwingungserreger (42, 45) für jedes Messrohr (23, 24), wobei der Schwingungserreger (42, 45) dazu eingerichtet ist, das Messrohr (23, 24) in Schwingung zu versetzen, und
mindestens zwei elektrisch ansteuerbaren Schwingungsaufnehmern (41, 43, 44, 46), wobei die Schwingungsaufnehmer (41, 43, 44, 46) dazu eingerichtet sind, die Schwingung mindestens eines der beiden Messrohre (23, 24) aufzunehmen,
**dadurch gekennzeichnet, dass** die Schwingungserreger (42, 45) und die Schwingungsaufnehmer (41, 43, 44, 46) raumfest zwischen den beiden Messrohren (23, 24) an dem Gehäusekörper (10) festgelegt sind.

2. Coriolis-Massendurchflussmessgerät nach Anspruch 1, **dadurch gekennzeichnet, dass** als Schwingungserreger (42, 45) und Schwingsaufnehmer (41, 43, 44, 46) elektromagnetische Spulen (1, 2, 3, 4, 5, 6) verwendet werden, wobei jede Spule (1, 2, 3, 4, 5, 6) mit einem an einem der Messrohre (23, 24) befestigten Permanentmagnet (11, 12, 13, 14, 15, 16) zusammenwirkt.

3. Coriolis-Massendurchflussmessgerät nach Anspruch 1 oder 2, **dadurch gekennzeichnet, dass** an dem Gehäusekörper (10) eine Ankonstruktion (7) vorgesehen ist, an der die Schwingungserreger (42, 45) und Schwingsaufnehmer (41, 43, 44, 46) festgelegt sind.

4. Coriolis-Massendurchflussmessgerät nach Anspruch 3, **dadurch gekennzeichnet, dass** die Ankonstruktion (7) mindestens eine Platine (33) aufweist, auf der die elektrisch ansteuerbaren Schwingungserreger (42, 45) und Schwingsaufnehmer (41, 43, 44, 46) festgelegt und über auf der Platine (33) ausgebildete Leiterbahnen ansteuerbar sind.

5. Coriolis-Massendurchflussmessgerät nach einem der vorhergehenden Ansprüche, **dadurch gekennzeichnet, dass** mindestens einem Messrohr (23, 24) zwei Schwingungsaufnehmer (41, 43; 44, 46) zugeordnet sind.

6. Coriolis-Massendurchflussmessgerät nach Anspruch 5, **dadurch gekennzeichnet, dass** in dem Coriolis-Massendurchflussmessgerät (100) zwei Schwingungserreger (42, 45) und zwei oder vier Schwingungsaufnehmer (41, 43, 44, 46) vorgesehen sind.

7. Coriolis-Massendurchflussmessgerät nach einem der vorhergehenden Ansprüche, **dadurch gekennzeichnet, dass** der Schwingungserreger (42, 45) an dem Messrohr (23, 24) in der Mitte zwischen den Enden des Messrohrs (23, 24) angeordnet ist.

8. Coriolis-Massendurchflussmessgerät nach einem der vorhergehenden Ansprüche, **dadurch gekennzeichnet, dass** ein Schwingungsaufnehmer (41, 43, 44, 46) an dem Messrohr (23, 24) zwischen dem einen Ende des Messrohres (23, 24) und dem Schwingungserreger (42, 45) angeordnet ist und ein anderer Schwingsaufnehmer (41, 43, 44, 46) an demselben Messrohr (23, 24) zwischen dem anderen Ende des Messrohres (23, 34) und dem Schwingungserreger (42, 45) angeordnet ist.

9. Coriolis-Massendurchflussmessgerät nach einem der Ansprüche 2 bis 8, **dadurch gekennzeichnet, dass** die Messrohre (23, 24) parallel verlaufend angeordnet sind und die Permanentmagneten (11, 12, 13; 14, 15, 16) an den Messrohren (23, 26) einander gegenüberliegend befestigt und derart ausgerichtet sind, dass sich die Permanentmagneten (11, 12, 13; 14, 15, 16) anziehen oder abstoßen.

10. Coriolis-Massendurchflussmessgerät nach einem der vorhergehenden Ansprüche, **dadurch gekennzeichnet, dass** der Gehäusekörper (10) des Coriolis-Massendurchflussmessgerät (100) als massiver Materialblock ausgebildet ist, in den als Strömungseinlass (31) und als Strömungslauslass (32) auf einander gegenüberliegenden Stirnseiten jeweils eine Öffnung (25, 26) eingelassen ist, wobei jeweils zwei Strömungskanäle (34, 35) aus jeder Öffnung (25, 26) zu einem Ausgang in einer Seitenfläche des Gehäusekörpers (10) führen und wobei der Ausgang eines der Strömungskanäle (34, 35) in das eine Messrohr (23, 24) und der Ausgang des anderen der Strömungskanäle (35, 34) in das andere Messrohr (24, 23) mündet.

11. Coriolis-Massendurchflussmessgerät nach einem der vorhergehenden Ansprüche, **dadurch gekennzeichnet, dass** die Enden des Messrohrs (23, 24) an dem Gehäusekörper (10) festgelegt sind.

12. Coriolis-Massendurchflussmessgerät nach Anspruch 11, **dadurch gekennzeichnet, dass** die Enden des Messrohrs (23 ,24) mit dem Gehäusekörper (10) verschweißt sind, wobei an dem Gehäusekörper (10) Zusatzmaterial für das Ausbilden der Schweißnaht bereitgestellt wird.

13. Coriolis-Massendurchflussmessgerät nach einem der Ansprüche 10 bis 12, **dadurch gekennzeichnet, dass** in dem massiven Gehäusekörper (10) eine Kabeldurchführung (29) zwischen der Öffnung (25) des Strömungseinlasses (31) und der Öffnung (26) des Strömungsauslasses (32) ausgebildet ist, die sich von der Seitenfläche mit den Ausgängen der Strömungskanäle (34, 35) zu der gegenüberliegenden Seitenfläche erstreckt.

14. Coriolis-Massendurchflussmessgerät nach einem der Ansprüche 4 bis 13, **dadurch gekennzeichnet, dass** auf der Platine (33) Komponenten der Messelektronik angeordnet sind.

15. Coriolis-Massendurchflussmessgerät nach einem der vorhergehenden Ansprüche, **dadurch gekennzeichnet, dass** die zwei Messrohre (23, 24) mittels einer oder mehreren Querstreben oder Knotenblechen miteinander verbunden sind.
